# EUROPEAN PATENT SPECIFICATION

(11) **EP 1 371 192 B1**
(45) Date of publication and mention of the grant of the patent: **12.10.2005**
(21) Application number: 02726126.2
(22) Date of filing: 02.03.2002
(51) Int. Cl.: H04L 12/56, H04Q 7/38, H04L 12/28

(54) **METHOD AND DEVICE FOR IMPROVING A DATA THROUGHPUT**
VERFAHREN UND VORRICHTUNG ZUR VERBESSERUNG EINES DATENDURCHSATZES
PROCEDE ET DISPOSITIF AMELIORANT UN DEBIT DE DONNEES

(30) Priority: 20.03.2001 EP 01106858
(43) Date of publication of application: 17.12.2003
(73) Proprietor: TELEFONAKTIEBOLAGET LM ERICSSON (publ), 164 83 Stockholm (SE)
(72) Inventor: LUDWIG, Rainer, 52393 Hürtgenwald (DE); MEYER, Michael, 52080 Aachen (DE)
(74) Representative: Tonscheidt, Andreas
(86) International application number: PCT/EP2002/002264
(87) International publication number: WO 2002/076036

(56) References cited:
- WO-A-99/66748
- US-A- 5 920 547

## Description

The invention relates to a method, a device and a computer program for improving a data throughput during a transmission via a communication network, in particular, if a channel switch takes place on a part connection within the communication network.

The transmission of data between the communicating partner instances is based on standardized protocol stacks. A protocol stack is formed of several protocol layers, hereinafter also referred to as layers. The uppermost layer, the application layer, comprises applications directly used by a user. The internet use is, for example, one possible application. A transport layer with the corresponding transport protocols such as the TCP (Transmission Control Protocol) is provided underneath the application layer. The Internet Protocol (IP) is an example for the network layer. The two lowermost layers, the link layer and the physical layer, may be summarized by the term network-oriented layer, since they are specifically defined in response to the underlying network.

The transport protocol TCP provides a reliable transport service of data between two communicating partners, whereby the TCP is responsible for an end-to-end transmission, possibly via a heterogeneous connection, which may section-wise be characterized by different network topologies, transmission rates and transmission delays. Laborious mechanisms guarantee the adaptation of the transmission to the characteristics of the connection link as well as robustness against the occurrence of errors. The precise description of the TCP methods may be inferred from "TCP/IP. Illustrated, Volume 1" by W. Richard Stevens. In the following, only a few of said mechanisms will be entered into in more detail.

For the time being a method is introduced, which relates to the detection of packet losses, which may take place if errors occur or in an overload situation during a transmission.

A mechanism for the detection of packet losses is based on the so-called cumulative acknowledgement scheme by TCP. If a packet loss occurs during a transmission, the receiver becomes aware thereof by receiving a data packet, which, according to the sequence number, was not expected as the next one in the sequence. As a result, an acknowledgement message is sent to the sender, which includes the sequence number of the data packet not received. In this case, said acknowledgement messages are called duplicate acknowledgments, and the receipt of the third duplicate acknowledgment indicates the sender the loss of the corresponding data packet, whereupon a retransmission of the data packet is initiated. The receipt of three duplicate acknowledgments will be interpreted by the sender as a temporary interruption. An acknowledgement message is sent to the sender once the receiver has received another data packet, and due to the fact that additional acknowledgements are received, the sender concludes that the data packets sent after the faulty data packet were actually received. This indicates that merely the explicit sending of the faulty data packet suffices to eliminate the error. A permanent disturbance is recognized by another mechanism, which will be introduced in the following.

The TCP mechanism, which recognizes a serious loss of data packets, consists in the use of time limits. An expiration of a time limit is the so-called timeout. A time limit is associated with a time margin provided for performing a certain task. If the task is not realized within said time margin, a timeout occurs. In the case of TCP, for example, a time margin is defined, the so-called RTT (Round Trip Time), which indicates the time passing between the delivery of a TCP packet to the IP layer and the receipt of a pertinent acknowledgement message from a receiver, that said data packet was received correctly. This time margin enables an adaptation to different transmission conditions, as said value contains a message on the present performance of a transmission. On the basis of the average value and the variance of the RTT, an RTO (Retransmission Timeout) is determined. An RTO designates the time point, at which a retransmission of a data packet takes place, for which it took longest to receive a corresponding acknowledgement message on the receipt thereof. The exact determination of the RTO can be inferred from RFC 2988, Transmission Control Protocol, November 2000. With timeout-based error recognition the exactness of the RTO calculation largely influences the data throughput. If the timeout has been scheduled too short, unnecessary data packets are retransmitted. If it is too long, excessive time passes until the loss of a data packet is noticed, which again results in time intervals during which one inactively waits for the continued transmission. The determination of an RTO takes place dynamically during a transmission so as to thereby record the RTT fluctuations in a transmission as precisely as possible. Despite said measures, the algorithm for calculating the RTO value entails problems, if abrupt fluctuations in the RTT occur. An improved algorithm has been developed, which provides more exact values for the RTO. Each time the RTO value is measured, a smoothed average value of the deviation between the previous average value of the RTT and the actually measured RTT values is additionally formed anew. If, the RTT changes abruptly, however, after merely small deviations had occurred for a longer time period in advance, also the calculated mean deviation cannot compensate the fluctuations immediately. If the RTT shows an essentially larger value than the RTO, it may be possible that the timeout for a sent data packet expires before an acknowledgement message for said data packet is received. The occurrence of timeout is evaluated as a data packet loss and, at the same time, as an indication for transmission problems. Consequently, although a data packet was transmitted and received correctly, the same is recognized as having been lost, and TCP mechanisms are started for eliminating the error and for avoiding the occurrence of additional errors. The basic idea behind said TCP mechanisms is to immediately reduce the transmission rate, at which the packets are forwarded to the communication network, when packet losses occur. Afterwards the rate is slowly increased so as to approach the actually existing network capacity.

The algorithms used for the flow control of the data packets, which avoid the occurrence of subsequent transmission errors, are called congestion avoidance and slow start algorithms. For the realization of said two algorithms, the so-called window technique is applied. With said technique, two kinds of windows are administered by the sender; a window whereof the size was suggested and confirmed by the receiver, the so-called advertised window, and the so-called congestion window. The number of packets which can be sent corresponds to the minimum of both windows. The determination of the size of the congestion window takes place step by step. Upon the initiation of a connection, a sender starts to send a packet. Upon receipt of an acknowledgement message from the receiver on the correct receipt the congestion window is increased by one, and, as a consequence, two packets are being sent. After the acknowledgement messages for the two sent packets are received, four packets and so on are being sent until a window size suggested by the receiver when the connection was set up is reached, or until a packet loss has occurred. In this connection, a packet loss is detected by a timeout or by the receipt of the third duplicate acknowledgment. Upon the detection of a packet loss by means of a timeout the size of the congestion window is reduced to one segment, whereby a slow start algorithm is initiated, and the timeout is doubled over the present value. Upon the initiation of a slow start algorithm the size of the congestion window at first grows exponentially. The exponential growth is maintained until half of the original window size is reached, i.e. the window size valid before the occurrence of a packet loss. Thereafter, the growth becomes linear until a packet loss is again recognized by a timeout or by the receipt of the third duplicate acknowledgment. In other words, if a permanent disturbance takes place, the window size is set at one packet maximum, and the RTO is set at double the value of the previous RTO value. Upon the restart of the transmission the window size is regulated by the slow start algorithm, and the RTO is calculated anew in response to the RTT.

In the case where a packet loss is detected by means of duplicate acknowledgments, however, no slow start algorithm is started. Instead, the size of the congestion window is reduced by half. In this case, only the packet to which the duplicate acknowledgments refer is retransmitted, and the transmission of the following packets is continued subsequently. Said method is also known as the so-called Fast Retransmit and Fast Recovery. An exact description thereof can be found in "TCP/IP. Illustrated, Volume 1" by W. Richard Stevens.

In other words, a detected packet loss results in a retransmission of the lost data packet and in the application of TCP methods such as the Fast Retransmit or Slow Start, which have been provided to eliminate packet losses and to avoid the occurrence of subsequent errors. A retransmission of a data packet and the application of the TCP methods, which are started upon the detection of a data packet loss, require resources and time. This has a negative effect on the transmission performance in those situations, in which a packet loss is recognized superfluously. For example, this happens if a transmission is delayed due to a short interruption, and the result may be that the receipt of an acknowledgement message takes such a long time that, in the meantime, a timeout expires and consequently a packet loss is recognized. In reality, however, the packet is received. Since, however, a packet loss was detected, the data packets already sent and correctly received are unnecessarily retransmitted and TCP mechanisms associated therewith are unnecessarily started. The superfluous occurrence of a timeout expiration is called spurious timeout, and the retransmission of already sent packets takes place according to the go-back-N algorithm.

This becomes particularly problematical in communication networks characterized by high fluctuations in the transmission rates. Part of said networks are cellular networks such as the GSM (Global System for Mobile Communication), GPRS (General Packet Radio Service); UMTS (Universal Mobile Telecommunication System), EDGE (Enhanced Data rates for GSM Evolution) or IMT-2000.

The spurious occurrence of a timeout expiration often takes place especially in mobile networks, however, above all, if sudden delays in the transmission occur due to a channel switch. A channel switch may occur due to a change between communication networks, for instance, due to a change from UMTS to GSM or from WLAN (Wireless Local Area Network) to GPRS. A channel switch may also take place in a communication network, for example, due to a handover. Another cause for the channel switch may be based on the priorities for the treatment of different users. The users, who make a phone call, often have a higher priority than users carrying out a data transfer. Therefore, if new users wanting to make a phone call join in, the data users can be shifted to other transmission channels. The channels are characterized by transmission parameters such as the transmission rate or the packet size, and a channel switch may, for example, result in different transmission rates, or at least lead to other RTTs measured on the link layer and, thus, possibly to the expiration of the timeout on the corresponding layers. A user may, for example, be shifted from one channel having a high transmission capacity to a channel having a smaller transmission capacity.

WO 99 66748 A discloses a mechanism for achieving optimal use of system resources by dynamically determining and allocating a best connection depending on the data packets, which are supposed to be transmitted. For this purpose transmission parameters of a current transmission are checked, by comparing currently determined transmissions parameters with a threshold value, in order to predict the future transmission and in order to decide which type of radio channel should bear the connection. Thus, said document provides a solution for deciding about the necessity to perform a channel switch. Said document does not consider at all a problem occurring after the decision is taken, wherein the channel switch leads to loose of data packets due to different channel capacities.

The changes associated with the channel switch on the physical layer are noticed by the transport layer, especially the TCP, only after the channel switch has taken place, namely because an abrupt change in the RTT is recorded. Said changes may result in that a timeout is exceeded and thus in a retransmission of a data packet and in the start of the corresponding methods relating to the elimination of the occurred transmission error and to the avoidance of the occurrence of additional transmission errors. The channel switch commonly does not entail a data packet loss. For this reason, the determination of the packet loss by a timeout expiration and the performance of the TCP mechanisms started with said determination are superfluous. Said mechanisms require resources and a long time, resulting in the reduction of the transmission throughput. For example, given the slow start algorithm, the transmission capacity available is not optimally exploited due to the slowly increasing window size.

In accordance therewith it is the object of the present invention to provide a method and a device guaranteeing an optimized exploitation of the transmission capacity being available. The object of the present invention especially relates to an optimized use of the transmission capacity being available in a channel switch.

According to the invention this object is provided by the teaching of patent claim 1 and by the teaching of patent claims 11 and 15.

It is thereby an advantage that a superfluous adaptation of the protocols of the higher layers is avoided, so that the resources during a transmission are exploited in a more favorable manner.

Additional advantageous embodiments according to the invention are described in patent claims 2 to 10 and 12 to 14.

In the following, the invention will be explained in more detail by means of examples and figures, wherein
- Fig. 1: shows a flow chart according to the present invention,
- Fig. 2: illustrates a connection via a communication network,
- Fig. 3a: is a schematic illustration of the transmission rates of two channels,
- Fig. 3b: shows pre-scheduling,
- Fig. 3c: shows post-scheduling by using an additional channel,
- Fig. 3d: shows post-scheduling with a commonly used channel.

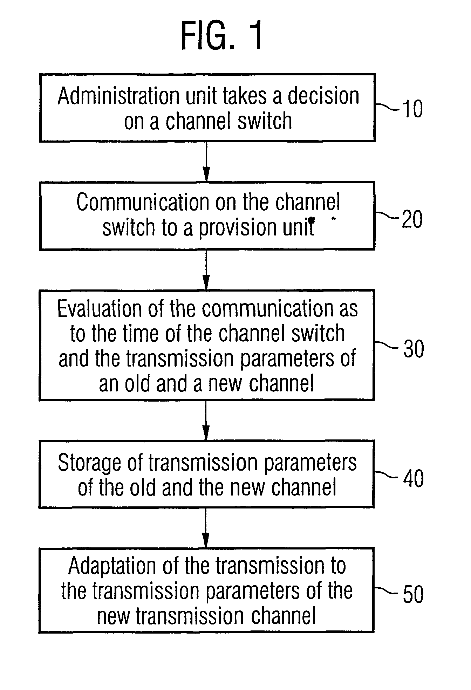

The invention will hereinafter be explained in more detail by means of figure 1 and patent claim 1.

A channel switch during a transmission, or an assignment of channels during a connection set-up takes place in a communication network by means of an administration unit for administering channels and a provision unit for providing, distributing and sending data via the channels. The channels are characterized by transmission parameters. The term transmission parameter covers different quantities such as the transmission rate, the packet size, the so-called processing time, which designates the delay time with the sender and the recipient due to the data processing. Additional transmission parameter will hereinafter be dealt with in more detail. The transmission parameters cause the delay time of the packets, and the adaptation of the transmission parameters influences the adaptation of the packet delay times. In this respect the packet delay time stands for the delays in the transmissions of data packets, which may, for example, be caused by the reduction in the transmission rate. For this reason, the definitions introduced in this connection will in the following be used alternatively, unless it is explicitly mentioned as to which transmission parameters are concerned.

According to figure 1 the decision on the channel switch is taken by the administration unit in a first step 10. Said unit has the necessary information and corresponding algorithms, which assist in taking said decision. This decision, which contains the time of the channel switch and the transmission parameters of a new and an old channel, is communicated to the provision unit, 20. The provision unit evaluates said communication, whereby it is especially evaluated as to whether a channel switch is to be carried out immediately or delayed, 30. On the basis of said information an adaptation of the transmission parameters is realized either before or after the performance of the channel switch. Another possibility provides for the realization of the adaptation both, before or after the performance of a channel switch. The adaptation 50 takes place on the basis of the determination of the data packets to be transmitted. For this purpose, the packet delay time caused by the transmission parameters of the new channel as well as of the old channel are taken into account. If it is, for instance, established that the packet delay time of the new channel is longer, the packet delay time of the old channel is deliberately increased prior to the performance of the channel switch, namely by providing and transmitting fewer data packets. In the case where a channel switch has already taken place, the packet delay time is reduced by temporarily transmitting more data packets, for example, via an additional data channel.

In order to realize an adaptation of the transmission parameters of channels having different packet delay times, a storage of the transmission parameters of an old or/and a new channel has to be performed, e.g. by means of storing them in the means provided for said purpose, 40. In the case where a channel switch has already taken place, the transmission parameters of the old channel are secured so as to guarantee a subsequent adaptation of the transmission parameters to the conditions of the new channel on the basis of the transmission parameters of the old and the new channel. In the case of a forthcoming channel switch, the storage of the transmission parameters of the new channel takes place such that an adaptation of the transmission parameters of the old channel, which, at this time, is still in use, however, to the transmission parameters of the new channel used after the performed channel switch is guaranteed.

A system comprising an administration unit for administering channels and a provision unit for providing data for the transmission via the channels is provided for the realization of the inventive solution to improve a data throughput of a transmission via a communication network. Said system has a decision means, which is, for example, disposed in the administration unit. The decision means takes a decision on a channel switch. The decision is communicated to the provision unit by means of a communication means. Upon the receipt of the communication, the transmission parameters of an old channel and a new channels are stored in a memory. This is preferably performed in the provision unit. On the basis of the transmission parameters of the old channel and the new channel, an adaptation of the transmission of the old channel to the transmission parameters of the new channel is performed by an adaptation means.

In the following the invention will be explained in more detail by means of an embodiment, whereby the embodiment exemplarily relates to the UMTS.

For this purpose, a network system is used, which will here briefly be explained in a schematic manner. The UMTS network comprises user equipment being able to communicate via an UTRAN (UMTS Terrestrial Radio Access Network) with the CN (Core Network). The user equipment, hereinafter also referred to as mobile station, may be a UMTS terminal. The mobile station communicates with a node B via a radio connection. Said node B, again, is connected to an RNC (Radio Network Controller) being part of the UTRAN. The RNC is connected to the CN. Another unit, the so-called gateway GGSN is responsible for a communication with an external network, for example, another mobile network or the Internet.

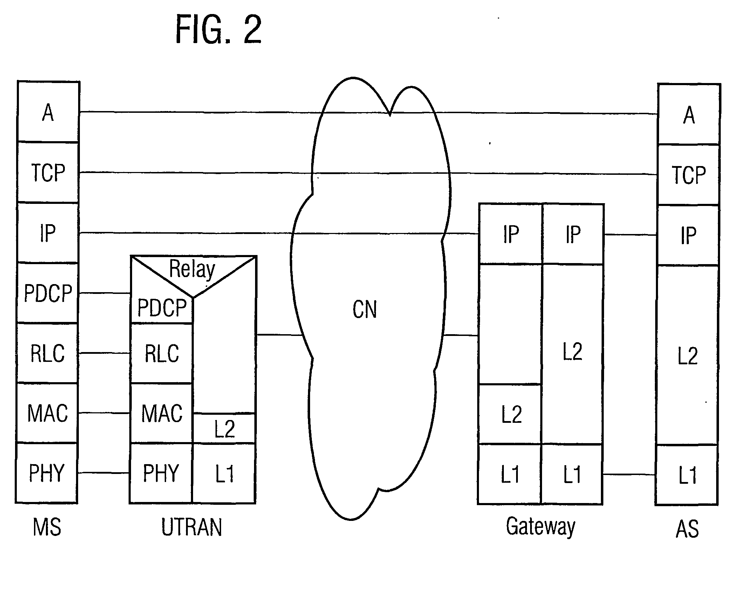

In the following the network-oriented layers of the protocol stack of a mobile station and a UTRAN are explained in more detail by means of figure 2.

Figure 2 illustrates schematically a connection between a mobile station MS and a so-called server AS. As was described above, a UTRAN (UMTS Terrestrial Radio Access Network), a CN (Core Network) and a gateway are involved in said connection. Except for the CN, said units are illustrated by means of protocol stacks. As has already been described, a protocol stack consists of several protocol layers. The protocol layers are, according to figure 2, correspondingly designated in the respective protocol stacks of the units. The protocol stack of the MS, for example, contains an application layer A. Thereunder are provided the transport layer TCP, then the network layer IP and thereunder the network-oriented layers. The network-oriented layers contain a convergence protocol PDCP (Packet Data Convergence Protocol), a thereunder integrated RLC (Radio Link Control) layer, an MAC (Medium Access Control) layer and a physical layer (PHY). A similar structure of the network-oriented layers is likewise contained in the UTRAN. The continuous connecting lines point to the logic connections between the respective layers. As an example it can be seen from figure 2 that a TCP connection is an end-to-end connection. The network-oriented layers of the MS and UTRAN will be dealt with in more detail in the following. The network-oriented layers of the remaining units have merely been pointed out by the hints L1 and L2, as a detailed structure of said protocol layers is associated with the underlying network (CN) and is irrelevant in this respect.

The PDCP constitutes the interface between the network layer, e.g. the Internet protocol (IP) layer and the RLC layer. The PDCP's task hereby consists in the conversion, especially in the segmentation, of the IP packets into smaller data packets. With each connection set-up one or several RLC instances are activated on the RLC layer, which is regulated by the RRM (Radio Resource Management). The RLC layer is, inter alia, responsible for the subdivision of the received data into smaller data packets. On the basis of said data packets the correction of the errors can take place.

The MAC layer is responsible for the mapping of the logical channels to the transport channels, which comprises the multiplexing of the logical channels, the distribution of the data onto the different logical channels as well as the change of the logical channels onto the available transport channels on the basis of the decision taken in the RRM. In this connection, different kinds of the logical channels are distinguished in response to the used service. For example, a difference is made between the kind of information to be transmitted, user data or control data. The control data are transmitted by control channels. The Broadcast Control Channel (BCCH), for instance, transmits network information to the terminals being present in a cell and not coupled to the network, in other words, the terminals dispose of a channel connection. The different control channels of the MAC layer will not be dealt with in more detail at this point.

The so-called traffic channels transmit user data, whereby a difference is made between the so-called DTCH (Dedicated Traffic Channel) and the so-called CTCH (Common Traffic Channel). A DTCH is exclusively assigned to a terminal, so that the user data are transmitted exclusively by the DTCH. In contrast thereto, the CTCH is destined for the transmission of the data to a plurality of users.

Another differentiation in the division of the channels is made in view of the transmission direction. The data are either transmitted from the network to the user, which, in this case, is the so-called downlink, or the data are transmitted from the user to the network, in which case the transmission takes place on the so-called uplink. In this connection, there are channels being provided for either direction or for one direction only.

A similar differentiation with regard to the available channels in view of the transmission direction and the common or exclusive use of the transmission resources is likewise made between the transport channels, which are defined between the MAC layer and the physical layer. In this respect, a difference is made between the exclusively assigned channels, the so-called DCH (Dedicated Channels) and the common channels, the so-called CCH. The DCH channels are used on both, the uplink and the downlink. A DCH is exclusively assigned to a user for a transmission, and the stability of said channel is permanently controlled during a transmission so as to guarantee a quality of the radio transmission as constant as possible. This means, an exclusive assignment of the radio resources to a user takes place during a transmission.

In contrast thereto, the radio resources are shared between the different users as far as the CCH channels are concerned.

In the following, the different commonly used transport channels, which are relevant for the present invention, will be introduced.

The so-called RACH (Random Access Channel) and the so-called CPCH (Common Packet Channel) are available on the uplink. The RACH is responsible for the initiating network access including the connection set-up on the physical layer associated therewith. In addition, it is provided for supporting the transmission of the user data. Said task is likewise fulfilled by the CPCH.

On the downlink, the so-called FACH (Forward Access Channel) is responsible for the transport of both, the control data and the user data.
By means of the so-called DSCH (Downlink Shared Channel), the user data may additionally be transmitted to an exclusively dedicated channel, the DCH. A DSCH is proportionally used between the DCHs, for which it has been assigned.

The RRM's task, which is located in an RNC node, consists, inter alia, in the configuration of the radio resources in response to the characteristic and quality of the requested service. This means that the decision on a channel switch or on the channel assignment in a connection set-up is taken by the RRM. Said decisions relate to both, namely the transmission on the uplink as well as on the downlink, and they serve the regulation of an efficient compensation between the available transmission capacity on the transmission links and the requests made by the users using the resources of the transmission links.

By means of different algorithms, which need not be discussed here in more detail, the RRM determines as to when and in which form the channel switch has to take place. When applying said algorithms, for example, the performance budget of the mobile station and of the cell are taken into account. By using the defined threshold values the RRM takes a decision on the channel switch. In this respect, the algorithms comprise a corresponding hysteresis, which avoids switching back and forth too frequently. The taken decision is reflected in the form of parameters, which, among others, are forwarded to the RLC layer. The parameters in question are the transport formats such as the data rate, and the used algorithms such as the method for a retransmission of data packets.

In the following, the function of an MAC layer will be dealt with.

The MAC layer is responsible for the distribution of data packets received from the RLC layer to the physical connection by taking into account the permitted transmission rate. Said distribution will hereinafter be referred to as the so-called scheduling, and the function performing the same on the MAC layer will be referred to as MAC scheduler. The MAC layer, moreover, receives the transmission parameters from the RRM. The transmission parameters are, among others, the so-called TFS (Transport Format Set), the so-called TFCS (Transport Format Combination Set), the priorities of the logical transmission channels and the mapping of the logical transmission channels onto the transport channels. The distribution of the data packets to the physical connection is performed on the basis of said information.

In the following, the term TFS will briefly be dealt with more closely. On the MAC layer, one or more transport formats in the form of transport format set, the so-called TFS, is/are assigned to each transport channel. A transport format contains, for instance, information on the channel coding type, the depth of the interleaving or the transmission rate for the data, or, more precisely, the number of the data which may transmitted on the radio layer in a frame. For example, a TF set of the form (12,8,4,2,1) indicates that the transport channel, to which said set is assigned, can transmit either 12 or 8 or 4 or 2 or 1 data packet of the RLC layer in a frame on the radio layer. This means, on one hand, that the MAC layer has the information on the number of the data packets which can be sent in a TTI, whereby the TTI (Transmission Time Interval) designates the time, which was defined for the transmission of a frame. On the other hand, the MAC layer receives from the RLC layer the information on the data packets being available for the transmission, which are stored in an RLC buffer. The availability of both information causes the MAC layer to perform the scheduling algorithm.

In the UMTS it is possible to perform the channel switch in different ways. It is provided to change the transmission of the user data from a DCH to another DCH. In this connection it may occur that the transmission rate and/or the TTI of the newly assigned DCH differs from the DCH that was used last. Another possibility is to switch the transmission of the user data from a DCH to a CCH channel, whereby it has to be considered that the entire transmission rate of a CCH may be higher than that of a DCH. The user does not have, however, an exclusive possibility to use the channel, since said channel is shared with other user with the result that the effectively used transmission capacity can be smaller than the transmission capacity of the previously used DCH had guaranteed. A sharing of the CCH between several users is specified by the scheduling algorithm used.

As was already described, the channel switch may result in performance losses of the higher layers, e.g. the TCP layer, especially if the switch from a channel having a higher transmission rate to a channel having a lower transmission rate is performed abruptly. If the transmission rate is low, fewer packets are transmitted, which entails a long time interval between the transmission of a packet and the receipt of an acknowledgement message. This, again, results in that the time for the release of the packet from a higher protocol layer, e.g. the TCP, turns out to be long for a transmission.

The solution according to the invention suggests to more efficiently utilize the information on the channel switch, e.g. the time of the channel switch and the transmission parameters. In this respect, the transmission parameters of a new channel may have a relative or an absolute value over an old channel. On the basis of said information the data flow may be adapted to the properties of the new channel. If this is conferred to the introduced embodiment, the MAC layer is communicated the information on the channel switch by the RRM. On the basis of the transmission parameters, e.g. on the basis of the transmission rate of the old channel, in other words, the previously used channel, and of the newly assigned channel, the number of data packets to be transmitted via the physical connection is defined. The data are transmitted into the TTI. The time of the performance of a channel switch is used for applying a corresponding method. The solution according to the invention makes a difference between two embodiments, namely in response to the times at which the information flow takes place. If the MAC layer has the information on a forthcoming channel switch, the transmission parameters of the old channel are adapted to the expected packet delay time of the new channel. In the following, the term pre-scheduling will be used for this event. Another embodiment deals with the event, when the information on the channel switch is utilized only after the performance thereof through the MAC layer. In this connection, the term post-scheduling is used.

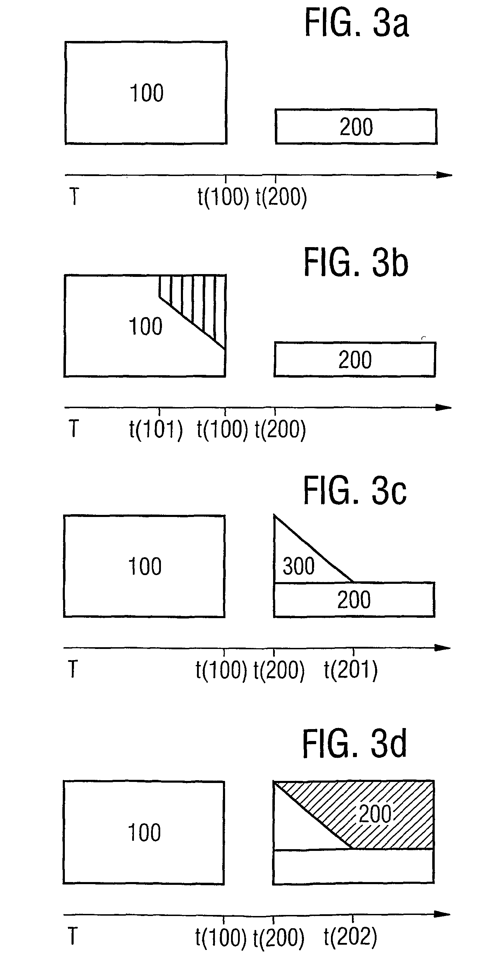

The invention will hereinafter be explained in more detail by means of figures 3a and 3b.

Figure 3a schematically illustrates the transmission rate of two channels. The left-hand square shows the high transmission rate of the old channel, and the left-hand square shows a new channel having a low transmission rate. The free section between the squares indicates a channel switch during which no data can be transmitted, but an exchange of the signaling messages takes place. The course in terms of time is illustrated by a time axis T provided underneath the figure. The channel switch takes place between time t (110) and t (200).

Figure 3b illustrates a pre-scheduling. The striped part of the left-hand square points to the unused transmission rate of the old channel so as to thereby adapt the transmission rate of the old channel to the transmission rate of the new channel. This is to say that as of time t (101) fewer data packets are transmitted. The data rate is reduced until time t (100) until the same is adapted to the transmission rate of the new channel. By means of the pre-scheduling, the number of the data packets passed on to the transport channel are controlled. In the case where the transmission rate of the newly assigned channel is lower than the data rate of the presently used channel, the number of the data packets transmitted per time unit, e.g. TTI, is reduced. If, for example, a channel switch from a channel having the transmission rate of 384kbit/sec to one merely having 64kbit/sec for the transmission has to be performed, a slow adaptation of the higher transmission rate to the lower transmission rate is initiated in accordance with the invention. In other words, the data are, for example, transmitted at 256kbit/sec at first, then at 128kbit/sec and eventually at 64kbit/sec. This, again, means, although the MAC scheduler could transmit more data packets, it provides fewer data packets for the transmission. In this connection, the provision of the data packets constitutes a withdrawal of the data packets from an RLC buffer. A slower withdrawal of the data packets from the RLC buffer influences the TCP, as the fact that fewer RLC data packets are transmitted results in that the acknowledgement message for a TCP packet is generated later on the receiver's side, thereby also arriving later on the sender's side. This entails that the RTT measurements, i.e. the time between the transmission of a TCP data packet and the receipt of an acknowledgement for the receipt of said data packet has a greater value. In this manner the TCP learns about the reduction in the transmission rate. The increased RTT especially effects an increase of the RTO. In this embodiment, the designation "presently used channel" corresponds to the above-chosen designation "old channel". Said wording corresponds to the event of the pre-scheduling in a more favorable manner.

For the adaptation of the transmissions different methods may be applied, which, for instance, reduce the transmission capacity differently fast. In case of said methods attention has to be paid that, on one hand, not too much transmission capacity remains unused and that, on the other hand, however, an abrupt change in the transmission parameters is avoided so as to prevent the expiration of the timeout.

In the case where the MAC layer receives information on the forthcoming channel switch, it can control the transmission in accordance with the invention, and slowly initiate the adaptation in that the MAC scheduler does not completely exploit the transmission rate of the used channel, as would be possible, but by slowly adapting the present transmission parameters to the transmission parameters of the newly assigned channel before the channel switch takes place. This is achieved in that fewer data packets than would basically be possible are provided for the transmission. The information on the number of data packets, which can basically be transmitted, is - as was already described - contained in the TFS. With said steps, the entire transmission of the TCP is slowly adapted at the same time. This method requires that the transmission parameters of the new channel are known in advance. Said information is, however, available to the RRM, the task of which it is to communicate said information to the MAC layer, so that the required steps are performed. It is the task of the MAC layer to store the corresponding transmission parameters. Due to the fact that the MAC layer receives said information before the channel switch takes place, it has both, namely the transmission parameters of the presently used channel and those of the newly assigned channel. On the basis of said information, the slow adaptation of the transmissions prior to the performance of the channel switch is obtained.

Due to the fact that the packet delay time of the presently used channel is artificially manipulated, especially increased, the artificial generation of a longer packet delay takes place on the TCP layer by step-wise measuring longer RTTs. The latter are likewise step by step considered when calculating the RTO resulting in the avoidance of spurious timeouts. As a consequence, the superfluous transmission of packets is avoided, where a packet loss is recognized erroneously, and the performance of mechanisms started upon the recognition of a data packet loss is avoided. In this manner, transmission resources and time are saved.
In some situations the channel switch has to be performed immediately, so that the time to carry out a pre-scheduling is not sufficient. In this case it is suggested by the invention to influence the scheduling of the data packets on the MAC layer after the performance of the channel switch. If the channel rate of the new channel is smaller, the abrupt reduction of the transmission rate must be compensated by transmitting more data in addition to the proportionally permitted transmission rate of the new channel. This can be inferred from figures 3c and 3d.

Figure 3c shows an event, where more data are transmitted by means of an additional channel. The additional channel, or respectively the used capacity of the additional channel, is illustrated by the triangle 300. Said channel is used until the transmission rate of the old channel is adapted to the transmission rate of the new channel, which happens at a time t (201). In other words, an adaptation of the TCP also takes place between times t (200) and t (201). This may, for example, extend to several TCP data packets. With said method it is required to store the transmission parameters of the old channel. During the post-scheduling the MAC layer performs the channel switch, and only thereafter will the adaptation be initiated. In other words, the newly assigned channel is already being used, and the MAC layer, therefore, has the transmission parameters of said channel. The transmission parameters of the old channel, i.e. of the channel used prior to the performance of the channel switch, were, however, stored. For this reason, the MAC layer has the parameters of the old and the new channel, and an adaptation of the transmissions is carried out on the basis of said information.

The forms of realization of the post-scheduling vary between the uplink and the downlink as well as between the switching to a DCH or to a CCH. UMTS provides for the so-called DSCH channels. As was already described, the latter relate to channels, which can proportionally be used in addition to a DCH so as to transmit data on the downlink.

The solution according to the invention provides to temporarily use said channels for the transmission on the downlink, if a channel switch takes place, so as to achieve a better adaptation of the transmission rates. In this case, the sharing of the DSCH between the users, who used the channel at that given time, has to be controlled. As an example, the priority principle with the preference of those users, with whom a channel switch has taken place, may be applied in this respect.

A similar principle may likewise be applied in the case of a channel switch from a DCH to a CCH. In this case, the entire rate of the CCH channel may be larger than the transmission rate of a DCH, however, due to the fact that the CCH is shared between several users, the transmission rate assigned to a user after a channel switch may be essentially smaller than the rate, which was available to the user prior to the channel switch on the DCH used last. The solution according to the invention suggests to assign the user temporarily, i.e. until the transmission has adapted to the transmission rate of the newly assigned channel, a larger share of the broadband in the CCH than was actually planned for the user. Said step requires the application of a priority principle, which prefers those users, with whom a channel switch has taken place, whereby the rule of a fair treatment for all users of a CCH is violated in the favor of one user. Due to the fact that the solution according to the invention guarantees, after a channel switch, the avoidance of the unnecessary performance of TCP mechanisms started upon the recognition of a packet loss, the number of the retransmissions occurring with abrupt interruptions is reduced. This results in that the transmission capacity of the CCH channel assigned to a user is used more optimally, and for this reason the entire transmission capacity of the CCH is used more effectively, which eventually results in higher transmission capacities being available to all users of the CCH. Said event is illustrated in figure 3d. Between times t (200) and t (202), an adaptation to the capacity assigned to a user takes place starting at time t (202). In other words, until time t (202) more capacity is made available to a user than he is actually allowed to have.

A third embodiment of the inventive solution provides for a combination of the pre- and post-scheduling, i.e. given a punctual report on a forthcoming channel switch, the pre-scheduling is performed first and the post-scheduling is applied after the performance of the channel switch.

The pre-scheduling proves to be advantageous when taking into account the time delays associated with the channel switch, namely in the determination of the data quantity to be transmitted. During a channel switch between t (100) and t (200) signaling messages are exchanged, which require time and, therefore, result in time delays, which may be taken into account during the pre-scheduling.

For the realization of the invention it is necessary that the RRM unit signalizes the channel switch to the MAC unit. In UMTS it is, however, feasible that the MAC unit is located in different network nodes, preferably in RNC or in a mobile station. In the following, different cases in response to the location of the MAC layer will be described as examples.

If the MAC unit and the RRM unit are located in the same network node, the invention is guaranteed to function. If the MAC unit is, for instance, located in the terminal of the user, a signaling to the MAC layer is required. It is likewise required to inform the MAC layer, if the same is provided in an RNC other than that where the RMM was located. In this case, a signal must be sent via the interface between the RNCs.

Furthermore, the invention relates to a computer program stored on a computer-readable medium or in a form, which can be loaded in a working memory of a computer, whereby the computer program controls a device according to one of claims 1 to 10.

## Claims

1. Method for improving a data throughput of a transmission via a communication network comprising an administration unit for administering channels having transmission parameters, and a provision unit for providing, distributing and transmitting data via the channels,
- wherein the administration unit informs the provision unit about a channel switch from an old to a new channel (10), and
- wherein the information on the transmission parameters of the new and the old channel as well as on a time of the performance of the channel switch is provided to the provision unit (20), and
- wherein, on the basis of said information (30), an adaptation (40) of the transmission parameters of the old channel to the transmission parameters of the new channel by defining amount of data to be transmitted via the new channel is performed applying a corresponding, depending on the time of the performance of the channel switch scheduling-method of the data onto the channels.

2. Method according to claim 1, wherein the adaptation is realized by controlling the number of data packets transmitted in a time unit.

3. Method according to claim 1 or 2, wherein the adaptation of the data is carried out before and/or after the performance of a channel switch.

4. Method according to one of the preceding claims, wherein, with the adaptation to a channel, whereof the transmission parameters cause a long packet delay time, the number of data packets provided for the transmission is reduced prior to the performance of the channel switch.

5. Method according to one of the preceding claims, wherein, with the adaptation to a channel, whereof the transmission parameters cause a long packet delay time, more data are temporarily transmitted in addition to a proportionally permitted transmission capacity after the performance of the channel switch.

6. Method according to claim 5, wherein additional data are transmitted via one or more additional channels.

7. Method according to claim 5, wherein a higher transmission capacity is temporarily provided in a channel for the transmission of more data.

8. Method according to one of the preceding claims, wherein the transmission parameters are stored for performing an adaptation.

9. Method according to one of the preceding claims, wherein the channel switch is performed on an exclusively used channel.

10. Method according to one of the preceding claims, wherein the channel switch to a channel commonly used by several users is performed.

11. Device for improving a data throughput of a transmission via a communication network comprising an administration unit for administering channels having transmission parameters, and a provision unit for providing, distributing and transmitting data via the channels, comprising
- decision means in the administration unit for taking a decision on a channel switch (10), and
- communication means for communicating the decision to the provision unit (20), and
- a memory for storing the transmission parameters of an old channel and/or a new channel, and
- adaptation means for adapting the transmission to the transmission parameters of the new channel by defining amount of data to be transmitted via the new channel and by applying a corresponding depending on the time of the performance of the channel switch scheduling-method of the data onto the channels.

12. Device according to claim 11, wherein the administration unit and the provision unit are located in a network node.

13. Device according to claim 11, wherein the administration unit and the provision unit are located in different network nodes.

14. Device according to claim 13, wherein a signaling between the provision unit and the administration unit is provided for transmitting the communication.

15. Computer program stored on a computer-readable medium or in a form, which can be loaded in a working memory of a computer, wherein the computer program performs the method according to one of claims 1 to 10.

## Patentansprüche

1. Verfahren zum Verbessern eines Datendurchsatzes einer Übertragung über ein Kommunikationsnetz, umfassend eine Verwaltungseinheit zum Verwalten von Kanälen, die Übertragungsparameter aufweisen, und eine Bereitstellungseinheit zum Bereitstellen, Verteilen und Übertragen von Daten über die Kanäle,
- wobei die Verwaltungseinheit die Bereitstellungseinheit über eine Kanalumschaltung von einem alten auf einen neuen Kanal (10) informiert, und
- wobei die Information über die Übertragungsparameter des neuen und des alten Kanals sowie über eine Zeit der Durchführung der Kanalumschaltung der Bereitstellungseinheit (20) bereitgestellt wird, und
- wobei aufgrund der Information (30) eine Anpassung (40) der Übertragungsparameter des alten Kanals an die Übertragungsparameter des neuen Kanals durch Definieren einer über den neuen Kanal zu übertragenden Datenmenge durchgeführt wird, unter Anwendung eines entsprechenden Scheduling-Verfahrens der Daten auf die Kanäle in Abhängigkeit der Zeit der Durchführung der Kanalumschaltung.

2. Verfahren nach Anspruch 1, wobei die Anpassung durch Steuern der in einer Zeiteinheit übertragenen Anzahl von Datenpaketen realisiert wird.

3. Verfahren nach Anspruch 1 oder 2, wobei die Anpassung der Daten vor und/oder nach der Durchführung einer Kanalumschaltung ausgeführt wird.

4. Verfahren nach einem der vorstehenden Ansprüche, wobei bei der Anpassung an einen Kanal, dessen Übertragungsparameter eine lange Paketverzögerungszeit verursachen, die für die Übertragung bereitgestellte Anzahl von Datenpaketen vor der Durchführung der Kanalumschaltung reduziert wird.

5. Verfahren nach einem der vorstehenden Ansprüche, wobei bei der Anpassung an einen Kanal, dessen Übertragungsparameter eine lange Paketverzögerungszeit verursachen, mehr Daten zusätzlich zu einer proportional erlaubten Übertragungskapazität nach der Durchführung der Kanalumschaltung temporär übertragen werden.

6. Verfahren nach Anspruch 5, wobei zusätzliche Daten über einen oder mehrere zusätzliche Kanäle übertragen werden.

7. Verfahren nach Anspruch 5, wobei in einem Kanal eine höhere Übertragungskapazität temporär für die Übertragung von mehr Daten temporär bereitgestellt wird.

8. Verfahren nach einem der vorstehenden Ansprüche, wobei die Übertragungsparameter zur Durchführung einer Anpassung gespeichert werden.

9. Verfahren nach einem der vorstehenden Ansprüche, wobei die Kanalumschaltung auf einem exklusiv verwendeten Kanal durchgeführt wird.

10. Verfahren nach einem der vorstehenden Ansprüche, wobei die Kanalumschaltung auf einen Kanal, der von mehreren Benutzern gemeinsam benutzt wird, durchgeführt wird.

11. Vorrichtung zum Verbessern eines Datendurchsatzes einer Übertragung über ein Kommunikationsnetz, umfassend eine Verwaltungseinheit zum Verwalten von Kanälen, die Übertragungsparameter aufweisen, und eine Bereitstellungseinheit zum Bereitstellen, Verteilen und Übertragen von Daten über die Kanäle, umfassend
- Entscheidungsmittel in der Verwaltungseinheit zum Treffen einer Entscheidung über eine Kanalumschaltung (10), und
- Kommunikationsmittel zum Übermitteln der Entscheidung an die Bereitstellungseinheit (20), und
- einen Speicher zum Speichern der Übertragungsparameter eines alten Kanals und/oder eines neuen Kanals, und
- Anpassungsmittel zum Anpassen der Übertragung an die Übertragungsparameter des neuen Kanals durch Definieren einer über den neuen Kanal zu übertragenden Datenmenge und durch Anwenden eines entsprechenden Scheduling-Verfahrens der Daten auf die Kanäle in Abhängigkeit der Zeit der Durchführung der Kanalumschaltung.

12. Vorrichtung nach Anspruch 11, wobei die Verwaltungseinheit und die Bereitstellungseinheit in einem Netzwerkknoten angeordnet sind.

13. Vorrichtung nach Anspruch 11, wobei die Verwaltungseinheit und die Bereitstellungseinheit in unterschiedlichen Netzwerkknoten angeordnet sind.

14. Vorrichtung nach Anspruch 13, wobei eine Signalisierung zwischen der Bereitstellungseinheit und der Verwaltungseinheit für die Übertragung der Kommunikation bereitgestellt wird.

15. Computerprogramm, das auf einem computerlesbaren Medium oder in einer Form gespeichert ist, die in einen Arbeitsspeicher eines Computers ladbar ist, wobei das Computerprogramm das Verfahren nach einem der Ansprüche 1 bis 10 ausführt.

## Revendications

1. Procédé pour améliorer un débit de données d'une transmission via un réseau de communication comprenant une unité d'administration pour administrer des canaux ayant des paramètres de transmission et une unité de fourniture pour fournir, distribuer et transmettre des données via les canaux,
- dans lequel l'unité d'administration informe l'unité de fourniture au sujet d'une commutation de canal d'un canal ancien à un canal nouveau (10), et
- dans lequel l'information relative aux paramètres de transmission du canal ancien et du canal nouveau ainsi qu'à la durée d'exécution de la commutation de canal est fournie à l'unité de fourniture (20), et
- dans lequel, sur la base de ladite information (30), une adaptation (40) des paramètres de transmission du canal ancien aux paramètres de transmission du canal nouveau en définissant une quantité de données à transmettre via le nouveau canal est effectuée en appliquant un procédé de programmation correspondant des données sur les canaux, en fonction de la durée d'exécution de la commutation de canal.

2. Procédé selon la revendication 1, dans lequel l'adaptation est réalisée en contrôlant le nombre de paquets de données transmis pendant une unité de temps.

3. Procédé selon la revendication 1 ou 2, dans lequel l'adaptation des données est effectuée avant et/ou après l'exécution d'une commutation de canal.

4. Procédé selon une des revendications précédentes, dans lequel, en raison de l'adaptation à un canal, moyennant quoi les paramètres de transmission entraînent un long délai d'attente des paquets, le nombre de paquets de données fourni en vue de la transmission est réduit avant l'exécution de la commutation de canal.

5. Procédé selon une des revendications précédentes, dans lequel, en raison de l'adaptation à un canal, moyennant quoi les paramètres de transmission entraînent un long délai d'attente des paquets, plus de données sont temporairement transmises en plus d'une capacité de transmission proportionnellement permise après l'exécution de la commutation de canal.

6. Procédé selon la revendication 5, dans lequel des données additionnelles sont transmises via un ou plusieurs canaux additionnels.

7. Procédé selon la revendication 5, dans lequel une capacité de transmission plus grande est temporairement accordée à un canal en vue de la transmission d'un plus grand nombre de données.

8. Procédé selon une des revendications précédentes, dans lequel les paramètres de transmission sont mémorisés afin d'effectuer une adaptation.

9. Procédé selon une des revendications précédentes, dans lequel la commutation de canal est effectuée sur un canal utilisé exclusivement.

10. Procédé selon une des revendications précédentes, dans lequel la commutation de canal à un canal utilisé en commun par plusieurs utilisateurs est effectuée.

11. Dispositif pour améliorer un débit de données d'une transmission via un réseau de communication comprenant une unité d'administration pour administrer des canaux ayant des paramètres de transmission et une unité de fourniture pour fournir, distribuer et transmettre des données via les canaux, comprenant
- un moyen de décision dans l'unité d'administration pour prendre une décision concernant une commutation de canal (10), et
- un moyen de communication pour communiquer le décision à l'unité de foumiture (20), et
- un mémoire pour mémoriser les paramètres de transmission d'un canal ancien et/ou d'un canal nouveau, et
- un moyen d'adaptation pour adapter la transmission aux paramètres de transmission du nouveau canal en définissant une quantité de données à transmettre via le nouveau canal et en appliquant un procédé de programmation correspondant des données sur les canaux, en fonction de la durée d'exécution de la commutation de canal.

12. Dispositif selon la revendication 11, dans lequel l'unité d'administration et l'unité de foumiture sont situées dans un noeud de réseau.

13. Dispositif selon la revendication 11, dans lequel l'unité d'administration et l'unité de foumiture sont situées dans des noeuds de réseau différents.

14. Dispositif selon la revendication 13, dans lequel une signalisation entre l'unité de foumiture et l'unité d'administration est prévue afin de transmettre la communication.

15. Programme informatique stocké sur un support pouvant être lu par un ordinateur ou sous une forme qui peut être chargée dans une mémoire de travail d'un ordinateur, moyennant quoi le programme informatique met en oeuvre le procédé selon une des revendications 1 à 10.
